# NOUVEAU FASCICULE DE BREVET EUROPEEN

(11) **EP 0 368 701 B2**
(45) Date de publication et mention de la décision concernant l'opposition: **18.03.1998**
(45) Mention de la délivrance du brevet: 02.12.1992
(21) Numéro de dépôt: 89402825.7
(22) Date de dépôt: 13.10.1989
(51) Int. Cl.: B60T 13/24, B60T 13/52

(54) **Système de freinage hydraulique assisté, et servomoteur d'assistance et valve de commande adaptes a un tel système**
Hydraulische Servobremsanlage und Bremskraftverstärker und Regelventil für eine solche Anlage
Hydraulic servo brake system, and brake booster and control valve suitable for such a system

(30) Priorité: 10.11.1988 FR 8814730
(43) Date de publication de la demande: 16.05.1990
(73) Titulaire: Bosch Systemes de Freinage, 93700 Drancy (FR)
(72) Inventeur: Carre, Jean-Jacques, -93700 Drancy (FR)
(74) Mandataire: Bentz, Jean-Paul

(56) Documents cités:
- GB-A- 765 079
- GB-A- 1 439 921
- GB-A- 2 000 564
- GB-A- 2 103 320
- US-A- 2 429 195
- US-A- 3 143 928
- US-A- 3 173 261

## Description

L'invention concerne un système de freinage hydraulique assisté conçu notamment pour être utilisé sur un véhicule automobile.

Sur les véhicules équipés d'un système de freinage hydraulique assisté, ce système comprend habituellement un servomoteur d'assistance et un maître-cylindre disposés bout à bout. De façon plus précise, la pédale de frein agit sur une tige de commande du servomoteur, ce qui a pour effet d'actionner à l'intérieur de ce dernier des moyens d'assistance déplaçant une tige de poussée qui actionne à son tour au moins un piston d'actionnement équipant le maître-cylindre. Cette disposition compacte est avantageuse, car elle permet de donner à l'ensemble servomoteur-maître-cylindre une structure relativement simple.

Il existe cependant des cas dans lesquels il n'est pas possible de placer directement le servomoteur entre la pédale de frein et le maître-cylindre. Cette situation se présente notamment sur certains véhicules avec conduite à droite. En effet, l'encombrement diamétral du servomoteur peut alors rendre impossible son implantation directement entre la pédale de frein et le maître-cylindre.

FR-A-2 629 033 décrit un système de freinage hydraulique assisté comportant une pédale de frein, un maître-cylindre, un servomoteur d'assistance au freinage et au moins un frein de mue, le maître-cylindre comprenant un corps pourvu d'un alésage dans lequel coulisse de façon étanche au moins un piston d'actionnement du frein de roue, et le servomoteur comprenant une tige de commande actionnant des moyens d'assistance agissant sur une tige de poussée actionnant le piston d'un émetteur de pression hydraulique, caractérisé par le fait que la pédale de frein agit sur une tige d'actionnement du maître-cylindre, un premier circuit hydraulique faisant communiquer une chambre de commande du maître-cylindre formée entre la tige d'actionnement et le piston d'actionnement avec une chambre de commande du servomoteur, délimitée en partie par la tige de commande, de telle sorte qu'un actionnement de la pédale de frein provoque un déplacement de la tige de commande dans le sens de l'actionnement des moyens d'assistance, et un deuxième circuit hydraulique faisant communiquer une chambre d'actionnement du servomoteur avec une chambre d'actionnement du maître-cylindre délimitée en partie par le piston d'actionnement, de telle sorte qu'un déplacement de la tige de poussée commandé par les moyens d'assistance entraîne un déplacement du piston d'actionnement dans le sens de l'actionnement du frein.

Dans un système de freinage ainsi conçu, la pédale de frein est placée dans le prolongement du maître-cylindre, alors que le servomoteur peut être placé à un endroit quelconque, sous le capot du véhicule. En effet, la montée en pression résultant de l'actionnement de la pédale de frein est transmise au servomoteur par le premier circuit hydraulique et la force d'assistance produite par ce servomoteur est transmise à son tour au maître-cylindre par le deuxième circuit hydraulique, quelle que soit la position occupée par le servomoteur par rapport au maître-cylindre.

Un tel système peut cependant présenter quelques inconvénients. En effet, le servomoteur et le maître-cylindre sont éloignés l'un de l'autre, et sont raccordés l'un à l'autre par des canalisations hydrauliques. Lors de l'actionnement de la pédale de frein, le fluide hydraulique contenu dans ces canalisations est soumis à une haute pression. Le nombre élevé de raccords hydrauliques sous pression, prévu selon cette conception, entraîne corrélativement l'augmentation du risque de fuites.

De plus, la conception particulière du maître-cylindre destiné à équiper un tel système de freinage implique un accroissement du nombre de ses composants, des coulissements étanches et des ressorts de rappel. Il s'ensuit donc qu'il faut exercer sur la pédale de frein un effort supérieur à celui qu'il est nécessaire d'exercer sur la pédale de frein d'un système classique, ce qui va à l'encontre du but d'assistance au freinage recherché.

L'invention a donc pour but de proposer un système hydraulique de freinage assisté dont la conception particulière autorise son implantation sur des véhicules automobiles de tout type, et notamment sur des véhicules avec conduite à droite, comportant un nombre réduit de raccords hydrauliques, et ne nécessitant qu'un faible effort d'entrée.

Dans ce but, l'invention a pour objet un système de freinage hydraulique assisté comportant :
- une pédale de frein reliée à une tige d'actionnement,
- un servomoteur pneumatique comprenant une chambre à dépression avant et une chambre de travail arrière séparées par une cloison étanche mobile solidaire d'une tige de poussée,
- un maître-cylindre simple dont le piston est actionné par ladite tige de poussée,
- un deuxième maître-cylindre dont les sorties sont reliées à au moins un frein de roue, et qui est soumis à la pression transmise par la tige d'actionnement augmentée de la pression d'assistance créée par le maître-cylindre simple.

Selon l'invention, le système de freinage comprend en outre :
- des moyens de commande du servomoteur comprenant un moyen de clapet mettant sélectivement en communication par un passage, une première chambre avec une deuxième chambre ou avec l'atmosphère, en réponse à l'actionnement de la tige d'actionnement par ladite pédale de frein,
- le servomoteur pneumatique étant disposé à distance des moyens de commande du servomoteur,
- une première canalisation faisant communiquer par un orifice la première chambre des moyens de commande avec la chambre de travail du servomoteur,
- une deuxième canalisation faisant communiquer la deuxième chambre des moyens de commande avec la chambre à dépression du servomoteur,
- lesdits moyens de commande comprenant un piston étagé coulissant dans un alésage étagé formé dans un corps et divisant intérieurement l'alésage en la première chambre formée à l'arrière de l'alésage étagé et la deuxième chambre formée à l'avant de l'alésage étagé,
- lesdits moyens de commande du servomoteur comprenant au moins un volume étanche ménagé dans le corps et relié par une canalisation à la chambre de travail dudit maître-cylindre simple,
- l'élément de clapet comportant une partie active annulaire frontale coopérant sélectivement avec deux sièges de clapet concentriques formés respectivement dans le piston et par un plongeur de valve coulissant dans le piston et couplé à la tige d'actionnement,
- le piston portant un disque de réaction sur lequel est en appui l'extrémité arrière d'une tige de poussée actionnant ledit deuxième maître-cylindre,
- la première chambre formée à l'arrière de l'alésage étagé, et dans laquelle débouchent le passage et l'orifice, étant entièrement délimitée par le piston étagé et l'alésage étagé.

On connaît également du document EP-A-0 326 965, faisant partiellement partie de l'état de la technique selon l'article 54 (3) CBE, un système de freinage hydraulique assisté comportant :
- une pédale de frein reliée à une tige d'actionnement,
- un servomoteur pneumatique comprenant une chambre à dépression avant et une chambre de travail arrière séparées par une cloison étanche mobile solidaire d'une tige de poussée,
- un maître-cylindre simple dont le piston est actionné par ladite tige de poussée,
- un deuxième maître-cylindre dont les sorties sont reliées à au moins un frein de roue, et qui est soumis à la pression transmise par la tige d'actionnement augmentée de la pression d'assistance créée par le maître-cylindre simple,
- des moyens de commande du servomoteur comprenant un moyen de clapet mettant sélectivement en communication par un passage une première chambre avec une deuxième chambre ou avec l'atmosphère, en réponse à l'actionnement de la tige d'actionnement par ladite pédale de frein,
- le servomoteur pneumatique étant disposé à distance des moyens de commande du servomoteur,
- une première canalisation faisant communiquer par un orifice la première chambre des moyens de commande avec la chambre de travail du servomoteur,
- une deuxième canalisation faisant communiquer la deuxième chambre des moyens de commande avec la chambre à dépression du servomoteur,
- lesdits moyens de commande comprenant un piston étagé coulissant dans un alésage étagé formé dans un corps et divisant intérieurement l'alésage en la première chambre formée à l'arrière de l'alésage étagé et la deuxième chambre formée à l'avant de l'alésage étagé,
- lesdits moyens de commande du servomoteur comprenant au moins un volume étanche ménagé dans le corps et relié par une canalisation à la chambre de travail dudit maître-cylindre simple,
- l'élément de clapet comportant une partie active annulaire frontale coopérant sélectivement avec deux sièges de clapet concentriques formés respectivement dans le piston et par un plongeur de valve coulissant dans le piston et couplé à la tige d'actionnement,
- le piston portant un disque de réaction sur lequel est en appui l'extrémité arrière d'une tige de poussée actionnant ledit deuxième maître-cylindre.

Des modes préférés de réalisation de l'invention vont maintenant être décrits à titre d'exemples, en se référant aux dessins annexés dans lesquels :
- La Figure 1 représente de façon schématique un système de freinage hydraulique assisté selon l'invention, et
- La Figure 2 est une vue en coupe longitudinale représentant la valve de commande du système de freinage de la Figure 1.

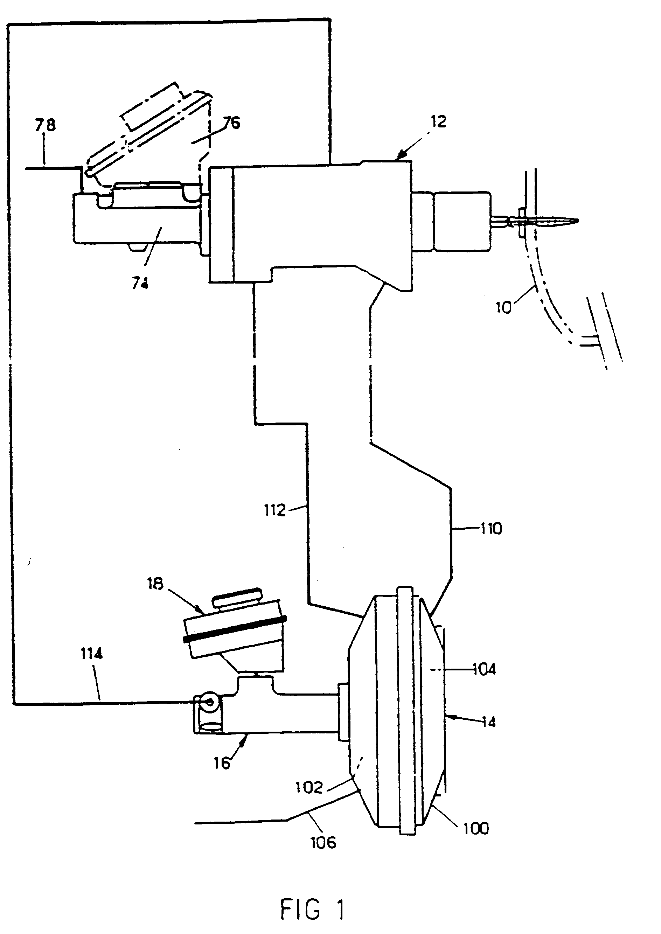

Sur la Figure 1, on a représenté très schématiquement un système de freinage hydraulique assisté qui comprend principalement une pédale de frein 10, une valve de commande 12, un servomoteur d'assistance au freinage 14, un émetteur de pression hydraulique 16, équipé d'un réservoir de liquide de freinage 18 et un maître-cylindre 74 équipé d'un réservoir 76.

Dans la description qui va suivre, on appellera par convention "arrière" l'extrémité vers laquelle se déplacent les pièces mobiles lorsque ces pièces reviennent vers leur position de repos et "avant" l'extrémité vers laquelle se déplacent les pièces mobiles lorsqu'elles sont actionnées. Les extrémités arrière sont orientées vers la droite sur les figures.

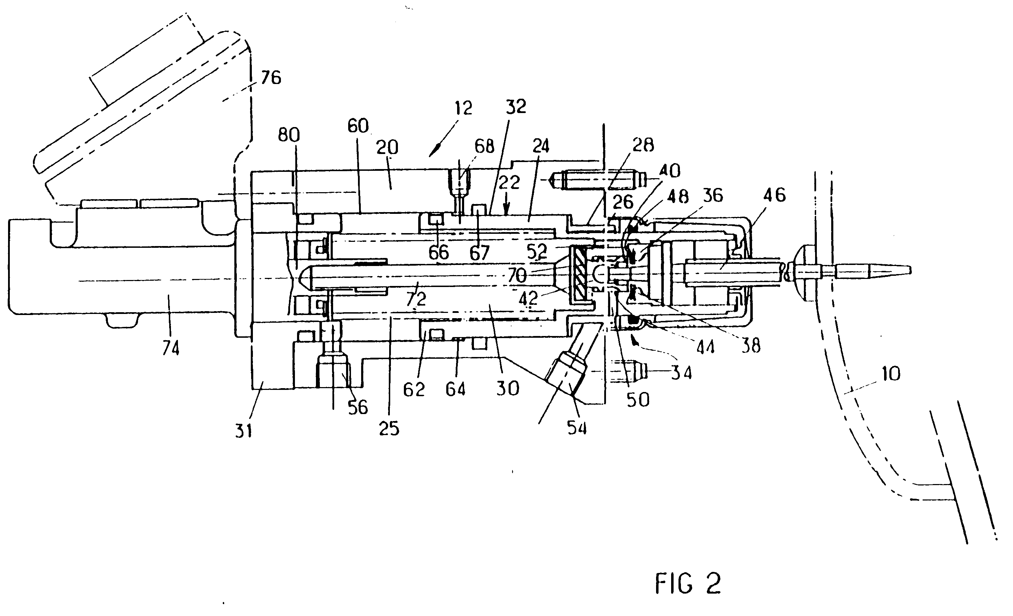

Comme l'illustre plus particulièrement la Figure 2, la valve de commande 12 comprend un corps 20 dans lequel est pratiqué un alésage étagé 22, dans lequel coulisse de façon étanche un piston étagé creux 24.

Le piston 24 divise intérieurement l'alésage 22 en une première chambre 26 formée à l'arrière de l'alésage étagé 22 dans sa partie de plus petit diamètre 28, et une deuxième chambre 30 formée à l'avant de l'alésage étagé 22 dans une partie de plus grand diamètre 60-32. La première chambre est mise sélectivement en communication avec la deuxième chambre ou avec l'atmosphère par l'intermédiaire d'un élément de clapet classique, annulaire, désigné dans son ensemble par la référence 34, disposé dans un logement interne 36 du piston 24 et comportant une partie active annulaire frontale 38 susceptible de coopérer sélectivement avec un premier siège de clapet 40 formé à l'extrémité arrière d'un plongeur de valve 42 monté à coulissement dans un alésage central 44 du piston 24 et couplé à l'extrémité d'une tige d'actionnement d'entrée 46 de la valve de commande 12, et avec un second siège de clapet 48 formé dans le piston 24 concentriquement autour du plongeur 42.

En coopérant avec les sièges de clapet 40 et 48, la partie active annulaire frontale 38 de l'élément de clapet 34 permet ainsi de commander la communication entre un passage radial 50 formé dans le piston 24 communiquant avec la première chambre 26 à l'arrière de la valve de commande 12 et débouchant dans l'alésage 44, soit avec l'atmosphère régnant à l'arrière du clapet 34, autour de la tige d'entrée 46, soit avec la deuxième chambre 30 à l'avant de la valve de commande 12 via au moins un passage 52 formé axialement dans le piston 24 et débouchant dans une zone de raccordement entre l'extrémité intérieure du logement 36 et la périphérie externe du siège de clapet 48.

La valve de commande 12 a donc un fonctionnement analogue à celui d'une valve de distribution de servomoteur à dépression qui, de façon classique, ferait partie intégrante du servomoteur qu'elle commande et serait située dans le moyeu de la cloison mobile du servomoteur pour obtenir une disposition compacte.

Le servomoteur d'assistance à dépression est disposé à distance de cette valve de commande, dans un endroit quelconque du compartiment moteur ayant un volume suffisant pour le recevoir.

Dans ce but, un orifice 54 est formé dans le corps 20 de la valve de commande 12 pour déboucher dans la première chambre 26, et un autre orifice 56 est formé dans le corps 20 pour déboucher dans la deuxième chambre 30.

En considérant à nouveau la Figure 1, on voit que le système de freinage hydraulique assisté comprend également un servomoteur à dépression 14 qui est constitué, d'une manière classique, par une enveloppe extérieure 100 en forme de coquille, délimitée intérieurement en une chambre avant à dépression 102 et une chambre arrière de travail 104 par une cloison déformable mobile (non représentée) reliée par une membrane étanche (non représentée) au bord périphérique extérieur de l'enveloppe 100.

La chambre avant 102 est normalement reliée à une source de vide (non représentée) au moyen d'un embout et d'une canalisation 106, et la cloison déformable mobile est rappelée dans sa position de repos arrière par un ressort de rappel prenant appui sur la partie avant de l'enveloppe 100. La cloison déformable mobile est en appui, par sa face avant et dans sa partie centrale, sur l'extrémité arrière d'une tige de poussée servant à transmettre à l'émetteur de pression 16 la force d'assistance engendrée dans le servomoteur 14, l'émetteur de pression étant fixé sur la face avant du servomoteur d'une façon connue.

La chambre arrière de travail 104 du servomoteur 14 est reliée, par une première canalisation 110 et l'orifice 54, à la première chambre 26 de la valve de commande 12, et la chambre avant à dépression 102 du servomoteur est reliée, par une deuxième canalisation 112 et l'orifice 56, à la deuxième chambre 30 de la valve de commande 12.

L'alésage étagé 22 comporte donc trois étages 28, 32 et 60 par ordre croissant de diamètre de l'arrière vers l'avant. Corrélativement, le piston étagé 24 comporte un étage 62 de diamètre égal à celui de l'étage 60 de l'alésage 22.

Le piston étagé 24 comporte donc lui aussi trois étages de diamètres égaux à ceux de l'alésage étagé 22 et coulissant de façon étanche dans chacun d'eux.
De plus, l'étage 62 du piston 24 divise intérieurement la partie 32 de l'alésage 22 pour former un volume annulaire 64 à l'arrière de l'étage 62 du piston 24 et à l'avant de l'étage 32 de l'alésage 22. Le volume 64 est rendu étanche par des joints 66 sur l'étage 62, et 67 dans l'alésage 32. Le volume 64 présente donc une capacité variable en fonction de la position du piston 24 dans l'alésage 22. Un orifice 68 est formé dans le corps 20 de la valve de commande de façon à déboucher en permanence dans le volume 64. Cet orifice 68 est relié à la canalisation 114 amenant le fluide de freinage sous pression provenant de l'émetteur de pression 16, qui est constitué par un maître-cylindre simple.

L'alésage 22 est obturé de façon étanche par une pièce 31, servant de pièce intermédiaire ou de bride pour le montage sur le corps 20 d'un maître-cylindre 74.

De plus, le piston 24 porte dans sa partie centrale un disque de réaction 70 en matériau élastomère sur lequel est en appui l'extrémité arrière d'une tige de poussée 72 servant à transmettre la force de freinage engendrée par le système au maître-cylindre 74. Ce dernier est fixé de façon étanche sur la partie avant du corps 20 de la valve de commande et comprend un piston 80 s'étendant dans l'alésage étagé 22 et sur lequel vient s'appuyer la tige de poussée 72. Le maître-cylindre est relié à un réservoir de liquide 76, et chasse ce liquide hydraulique sous pression dans une canalisation 78 vers au moins un frein de roue (non représenté).

Le système de freinage hydraulique qui vient d'être décrit fonctionne de la manière suivante. Au repos, toutes les pièces mobiles occupent leur position arrière, vers la droite sur les figures. Dans cette position, le clapet 34 de la valve de commande permet la communication entre la première chambre 26 et la deuxième chambre 30, et donc, par l'intermédiaire des canalisations 110 et 112, entre la chambre de travail 104 et la chambre à dépression 102 du servomoteur 14. La chambre 102 étant constamment reliée à une source de vide par la canalisation 106, la chambre 104 se trouve donc elle-même soumise à la même pression que la chambre 102 et est donc aussi sous vide, et la cloison déformable mobile est en équilibre dans sa position arrière.

Lorsque le conducteur du véhicule actionne la pédale de frein 10, la tige d'actionnement 46 se déplace vers l'avant. Sous l'effet de ce déplacement, le siège 40 formé sur le palpeur 42 s'écarte du clapet 38 et ce dernier vient en appui étanche sur le siège 48 formé sur le piston 24. Par conséquent, la communication entre la première chambre 26 et la deuxième chambre 30 est interrompue, et la première chambre 26 est mise en communication avec l'atmosphère extérieure. Par l'intermédiaire de l'orifice 54 et de la première canalisation 110, la chambre de travail 104 du servomoteur est elle aussi soumise à la pression atmosphérique, alors que la chambre à dépression 102 est toujours sous vide. Cette différence de pression entre les chambres 102 et 104 s'applique sur les deux faces de la cloison déformable mobile et tend à la déplacer vers l'avant, créant ainsi une force d'assistance.

Cette force d'assistance est transmise à la tige de poussée de l'émetteur de pression 16 constitué par un maître-cylindre simple relié à un réservoir de liquide de freinage 18, et chassant ce liquide hydraulique sous pression dans une canalisation 114.

L'accroissement de pression dans la canalisation 114 en sortie de l'émetteur 16 est transmis par l'orifice 68 au volume annulaire 64 de la valve de commande, et provoque donc l'extension de ce volume, qui se traduit par l'avancement du piston 24. Ce dernier fait à son tour avancer la tige de poussée 72, ainsi que le piston 80 du maître-cylindre 74 qui fera à son tour accroître la pression du fluide hydraulique dans la canalisation 78 vers les freins de roues.

Dans le cas d'une défaillance quelconque survenant dans la valve de commande ou dans le servomoteur, le freinage pourra toujours être réalisé par l'action mécanique directe de la pédale de frein 10, la tige d'actionnement 46, le piston 24, le disque de réaction 70, la tige de poussée 72 et le piston 80 du maître-cylindre 74. Le freinage en défaillance sera bien entendu obtenu sans assistance, c'est à dire avec une course de pédale allongée et un effort sur la pédale supérieur.

On obtient donc bien un système de freinage hydraulique assisté dans lequel le servomoteur est commandé de façon pneumatique et procure une assistance fournie sous forme hydraulique à un maître-cylindre, dans lequel le freinage est assuré même en cas de défaillance d'un des éléments procurant l'assistance, et dans lequel le servomoteur d'assistance à dépression peut être situé en un endroit quelconque du compartiment moteur et non plus nécessairement derrière la pédale de frein.

Conformément à l'invention, il est donc proposé un système de freinage hydraulique assisté dans lequel la pédale de frein agit directement sur une tige d'actionnement de la valve de commande alors que le servomoteur d'assistance au freinage peut être placé à un endroit quelconque sous le capot du véhicule. Un tel système de freinage hydraulique assisté est conçu en particulier pour être utilisé sur les véhicules à conduite à droite, dans lesquels il n'est généralement pas possible de placer le servomoteur de la façon habituelle entre la pédale de frein et le maître-cylindre. Il peut toutefois être utilisé dans d'autres cas, dès que l'implantation habituelle du servomoteur pose des problèmes d'encombrement. L'assistance au freinage désirée est obtenue avec un effort sur la pédale de frein inférieur à celui qui est nécessité par un système hydraulique classique, et avec un nombre réduit de raccords hydrauliques sous pression.

Bien entendu, l'invention n'est pas limitée au mode de réalisation qui vient d'être décrit à titre d'exemple, mais en couvre toutes les variantes.

Ainsi, la canalisation 106 reliée d'un coté à la source de vide a été représentée reliée de l'autre côté à la chambre à dépression avant 102 du servomoteur, mais pourrait tout aussi bien être reliée à la canalisation 112 ou à la deuxième chambre 30 au moyen d'un orifice qui serait pratiqué dans le corps de la valve de commande et débouchant de façon permanente dans cette chambre.

De même, l'assistance au freinage procurée par le servomoteur 14 et l'émetteur de pression 16 a été représentée comme étant fournie à la valve de commande 12 pour assister le déplacement du piston 24. Il est bien sur possible de fournir cette pression d'assistance au maître-cylindre 74, qui aura alors une chambre d'actionnement annulaire supplémentaire, de la manière décrite pour le maître-cylindre objet du document précité. Pour obtenir un système équilibré, il sera alors préférable de soumettre le disque de réaction 70 également à la force engendrée par la pression d'assistance.

Lorsque l'on assistera le déplacement du piston 24 au moyen de pistons auxiliaires 208, le nombre de ces pistons pourra être quelconque en fonction de l'assistance requise ou du diamètre de la valve.

D'autre part, il n'est pas nécessaire d'utiliser deux réservoirs 18 et 76, on peut n'en prévoir qu'un seul sur l'un des maîtres-cylindres et alimenter l'autre par l'intermédiaire de canalisations.

Enfin, bien que le système d'assistance ait été décrit comme fonctionnant entre la pression atmosphérique et le vide, il est bien clair que toutes autres pressions peuvent être utilisées, pourvu que leur différence permette de fournir l'assistance requise.

## Revendications

1. Système de freinage hydraulique assisté comportant :
- une pédale de frein (10) reliée à une tige d'actionnement (46),
- un servomoteur pneumatique (14) comprenant une chambre à dépression avant (102) et une chambre de travail arrière (104) séparées par une cloison étanche mobile solidaire d'une tige de poussée,
- un maître-cylindre simple (16) dont le piston est actionné par ladite tige de poussée,
- un deuxième maître-cylindre (74) dont les sorties sont reliées à au moins un frein de roue, et qui est soumis à la pression transmise par la tige d'actionnement (46) augmentée de la pression d'assistance créée par le maître-cylindre simple (16),
caractérisé en ce qu'il comprend en outre :
- des moyens (12) de commande du servomoteur (14) comprenant un moyen de clapet (34) mettant sélectivement en communication par un passage (50), une première chambre (26) avec une deuxième chambre (30) ou avec l'atmosphère, en réponse à l'actionnement de la tige d'actionnement (46) par ladite pédale de frein (10),
- le servomoteur pneumatique (14) étant disposé à distance des moyens (12) de commande du servomoteur,
- une première canalisation (110) faisant communiquer par un orifice (54) la première chambre (26) des moyens de commande (12) avec la chambre de travail (104) du servomoteur (14),
- une deuxième canalisation (112) faisant communiquer la deuxième chambre (30) des moyens de commande (12) avec la chambre à dépression (102) du servomoteur (14),
- lesdits moyens de commande (12) comprenant un piston étagé (24) coulissant dans un alésage étagé (22) formé dans un corps (20) et divisant intérieurement l'alésage (22) en la première chambre (26) formée à l'arrière de l'alésage étagé (22) et la deuxième chambre (30) formée à l'avant de l'alésage étagé (22),
- lesdits moyens de commande (12) du servomoteur (14) comprenant au moins un volume étanche (64, 212) ménagé dans le corps (20) et relié par une canalisation (114) à la chambre de travail dudit maître-cylindre simple (16),
- l'élément de clapet (34) comportant une partie active annulaire frontale (38) coopérant sélectivement avec deux sièges de clapet concentriques (48, 40) formés respectivement dans le piston (24) et par un plongeur de valve (42) coulissant dans le piston et couplé à la tige d'actionnement (46),
- le piston (24) portant un disque de réaction (70) sur lequel est en appui l'extrémité arrière d'une tige de poussée (72) actionnant ledit deuxième maître-cylindre, et en ce que
- la première chambre (26) formée à l'arrière de l'alésage étagé (22), et dans laquelle débouchent le passage (50) et l'orifice (54), est entièrement délimitée par le piston étagé (24) et l'alésage étagé (22).

## Claims

1. Assisted hydraulic braking system comprising:
- a brake pedal (10) connected to an actuating rod (46),
- a pneumatic booster (14) comprising a front vacuum chamber (102) and a rear working chamber (104) separated by a movable deformable partition acting on a push rod,
- a single master cylinder (16) the piston of which is actuated by said push rod,
- a second master cylinder (74) the outlets of which are connected to at least one wheel brake, and which is subjected to the pressure transmitted by the actuating rod (46) increased by the boosting pressure generated by the single master cylinder (16), characterised in that it further comprises:
- means (12) for controlling the booster (14), comprising a shutter means (34) putting a first chamber (26) selectively in communication, via a passage (50) with a second chamber (30) or with the atmosphere, in response to the actuation of the actuating rod (46) by the said brake pedal (10),
- the pneumatic booster (14) being arranged some distance from the means (12) of controlling the booster,
- a first pipeline (110) putting the first chamber (26) of the control means (12) in communication with the working chamber (104) of the booster (14) via an orifice (54),
- a second pipeline (112) putting the second chamber (30) of the control means (12) in communication with the vacuum chamber (102) of the booster (14),
- the said control means (12) comprising a stepped piston (24) sliding in a stepped bore (22) formed in a body (20) and dividing the bore (22) internally into the first chamber (26) formed at the rear of the stepped bore (22) and the second chamber (30) formed at the front of the stepped bore (22),
- the said means (12) of controlling the booster (14) comprising at least one leaktight volume (64, 212) formed in the body (20) and connected by a pipeline (114) to the working chamber of the said single master cylinder (16),
- the shutter element (34) having a front annular active part (38) interacting selectively with two concentric shutter seats (48, 40) formed respectively in the piston (24) and by a valve plunger (42) sliding in the piston and coupled to the actuating rod (46),
- the piston (24) carrying a reaction disk (70) on which bears the rear end of a push rod (72) actuating the said second master cylinder, and in that
- the first chamber (26) formed at the rear of the stepped bore (22) and into which the passage (50) and the orifice (54) open, is entirely delimited by the stepped piston (24) and the stepped bore (22).

## Patentansprüche

1. Hydraulische Servobremsanlage mit
- einem Bremspedal (10), das mit einer Betätigungsstange (46) verbunden ist,
- einem pneumatischen Servomotor (14), der eine vordere Dekompressionskammer (102) und eine hintere Arbeitskammer (104) aufweist, die durch eine mit einer Schubstange fest verbundene, bewegliche dichte Trennwand voneinander abgetrennt sind,
einem einfachen Hauptzylinder (16), dessen Kolben durch die Schubstange betätigt wird,
- einem zweiten Hauptzylinder (16), dessen Ausgänge mit wenigstens einer Radbremse verbunden sind, und der dem durch die Betätigungsstange (46) übertragenen Druck und zusätzlich dem durch den einfachen Hauptzylinder (16) erzeugten Hilfsdruck unterworfen ist,
dadurch gekennzeichnet, daß sie außerdem aufweist:
- Mittel (12) zum Steuern des Servomotors (14) mit einem Ventilmittel (34), das in Reaktion auf die Betätigung der Betätigungsstange (46) durch das Bremspedal (10) selektiv eine erste Kammer (26) mit einer zweiten Kammer (30) oder mit Atmophäre über einen Durchgang (50) in Verbindung bringt,
- wobei der pneumatische Servomoteur (14) im Abstand zu den Mitteln (12) zum Steuern des Servomoteurs angeordnet ist,
- eine erste Leitung (110), die die erste Kammer (26) der Steuermittel (12) mit der Arbeitskammer (104) des Servomotors (14) über eine Öffnung (54) in Verbindung treten läßt,
- eine zweite Leitung (112), die die zweite Kammer (30) der Steuermittel (12) mit der Dekompressionskammer (102) des Servomotors (14) in Verbindung treten läßt,
- wobei die Steuermittel (12) einen Stufenkolben (24) aufweisen, der in einer in einem Körper (20) ausgebildeten Stufenbohrung (22) gleitet und die Bohrung im Inneren in die im hinteren Teil der Stufenbohrung (22) gebildeten ersten Kammer (26) und die im vorderen Teil der Stufenfbohrung (22) gebildete zweite Kammer (30) unterteilt,
- wobei die Steuermittel (12) des Servomotors (14) wenigstens einen im Körper (20) angebrachten dichten Raum (64, 212) aufweisen, der durch eine Leitung (114) mit der Arbeitskammer des einfachen Hauptzylinders (16) verbunden ist,
- wobei das Ventilelement (34) einen ringförmigen wirksamen Stirnteil (38) aufweist, der selektiv mit zwei konzentrischen Ventilsitzen (48, 40) zusammenwirkt, die jeweils in dem Kolben (24) durch einen Ventilstößel (42) gebildet sind, der in dem Kolben gleitet und mit der Betätigungsstange (46) gekoppelt ist,
- wobei der Kolben (24) eine Gegendruckscheibe (70) trägt, an der sich das hintere Ende einer Schubstange (72) abstützt, die den zweiten Hauptzylinder betätigt, und dadurch, daß
- die im hinteren Teil der Stufenbohrung (22) gebildete erste Kammer (26), in welche der Durchgang (50) und die Öffnung (54) münden, vollständig durch den Stufenkolben (24) und die Stufenbohrung (22) abgegrenzt ist.
